# EUROPÄISCHE PATENTSCHRIFT

(11) **EP 2 886 290 B1**
(45) Veröffentlichungstag und Bekanntmachung des Hinweises auf die Patenterteilung: **29.03.2017**
(21) Anmeldenummer: 13198945.1
(22) Anmeldetag: 20.12.2013
(51) Int. Cl.: B29C 45/40, B29C 45/33, B29C 45/32, B29L 31/26, B29C 33/42, B29C 33/44, B29C 45/26

(54) **Verfahren und Einrichtung zum Entformen ringförmiger elastomerer Formteile von einem Formkern**
Method and device for removing annular elastomer articles molded from a moulding core
Procédé et dispositif de déformation de pièces moulées annulaires en élastomère par un noyau de moule

(43) Veröffentlichungstag der Anmeldung: 24.06.2015
(73) Patentinhaber: Siegfried Meyer Bakum GmbH & Co. KG, 49456 Bakum (DE)
(72) Erfinder: Meyer, Siegfried, 49377 Vechta (DE); Riewe, Reinhold, 49456 Bakum (DE)
(74) Vertreter: Meyer, Ludgerus

(56) Entgegenhaltungen:
- DE-A1- 2 825 640
- GB-A- 1 465 403
- US-A- 4 958 676

## Beschreibung

Die Erfindung betrifft ein Verfahren zum Entformen ringförmiger elastomerer Formteile von einem Formkern nach dem Oberbegriff des Anspruchs 1 sowie eine Einrichtung zur Durchführung eines derartigen Verfahrens nach dem Oberbegriff des Anspruchs 9.

Die Herstellung elastomerer Formteile, insbesondere Gummiringe, erfolgt heute im Wesentlichen im Spritzgussverfahren, wobei auf einem Formkern eine Vielzahl von parallel angeordneten halbschalenförmige Formnester ausgespritzt werden. Die Gegenformen, als von außen auf den Formkern aufgesetzte Formbacken, enthalten ebenfalls halbschalenförmige Formnester, so dass sich bei aufgelegten Formbacken ringförmige Hohlräume ergeben, in die Kautschuk oder Kunststoffmaterialien eingebracht werden können, die nach ihrer Vulkanisierung ringförmige Formteile bilden. Diese kommen insbesondere in der Abwassertechnik zum Einsatz.

Zur Entformung der Formteile aus der Spritzgussform werden zunächst die äußeren Formbacken von dem Formkern abgenommen und dann müssen die Formteile, die noch zur Hälfte in den Formnestern des Formkerns liegen, von dem Formkern abgezogen werden. Aufgrund ihrer elastomeren Eigenschaften werden die Formteile in der Regel in Längsrichtung über die Oberfläche des Formkerns gezogen und von dessen freiem Ende abgenommen.

Aus der DE-OS 21 15 680 ist eine Abstreifvorrichtung bekannt, welche in Axialrichtung des Formkerns laufende Riemen enthält, die gegenläufig so angetrieben sind, dass sich die Abstreifriemen während des Abstreifvorgangs zum freien Formkernende hin bewegen und damit die Formteile über den Formkern schieben. Eine entsprechende Vorrichtung ist auch aus der GB 1465403 bekannt.

Aus der DE 30 23 447 ist eine ähnliche Abstreifvorrichtung bekannt, die jeweils als starre langgestreckte Körper ausgebildet ist, die in Abstreifrichtung, angestellt an den Umfang der abzustreifenden Ringe, parallel zur Formkernachse bewegbar sind und die entgegen der Abstreifrichtung frei rückbewegbar sind. Aus dieser Druckschrift ist es auch bekannt, das Abstreifen der Ringe alternativ mittels einer Druckluftvorrichtung zu bewerkstelligen.

Schließlich ist aus der DE 33 06 513 eine ähnliche Einrichtung bekannt, bei der der Abstreifer einen den letzten Ring hintergreifenden Haken aufweist, um das Abstreifen zu erleichtern.

Grundsätzlich ist es bei allen vorgenannten Vorrichtungen erforderlich, dass die Ringe zum Abstreifen von dem Ort, an dem sie auf dem Formkern hergestellt sind, bis zum freien Ende des Formkerns über den Formkern geführt werden müssen, wobei die im Laufe des Abzugweges befindlichen Formnester entweder noch befüllt sind oder bereits leer sind. In jedem Fall werden die Ringe dabei über eine mit Tälern und Höhen versehene Oberfläche gezogen, was die große Gefahr mit sich bringt, dass die Ringe dabei beschädigt werden können oder sich, insbesondere bei größerem Durchmesser oder nicht kreisförmiger Form, ineinander verschlingen, so dass eine Nachbearbeitung der Ringe erforderlich ist. Ein weiterer Nachteil liegt darin, dass die dargestellten Abstreifvorrichtungen schwierig einzustellen sind, da sie bei zu geringem Druck auf die Formteile nicht in der Lage sind, die Formteile über den gesamten Verschiebeweg zu streifen, und bei zu hohem Druck eine Beschädigung der Ringe hervorrufen können. Es ergibt sich ferner ein hoher Verschleiß der Formkerne, welches durch das Schleifen der Abstreifer auf dem Formkern hervorgerufen wird.

Der Erfindung liegt daher die Aufgabe zugrunde, ein Verfahren zum Entformen ringförmiger elastomerer Formteile von einem Formkern anzugeben, bei dem die Formteile auf einfache Weise und sehr schonend von dem Formkern abgezogen werden können, wobei eine Verdrehung der Formteile vermieden wird und der Verschleiß eines Formkerns erheblich verringert ist.

Der Erfindung liegt weiterhin die Aufgabe zugrunde, eine Einrichtung zum Entformen ringförmiger elastomerer Formteile anzugeben, welche konstruktiv einfach aufgebaut ist, eine Nachbearbeitung der Formteile vermeidet und kostengünstig herstellbar ist.

Diese Aufgaben werden durch die in den Ansprüchen 1 und 9 angegebene Erfindung gelöst. Vorteilhafte Weiterbildungen der Erfindung sind in Unteransprüchen angegeben.

Die Erfindung geht aus von einem Verfahren zum Entformen von elastomeren Formteilen von einem Formkern einer den inneren Formkern und äußere Formbacken aufweisenden Spritzgussform, in der die Formteile parallel zueinander in ringförmigen Formnestern des Formkerns hergestellt sind.

Erfindungsgemäß wird der Formkern nach der Herstellung der hergestellten elastomeren Formteile und Entfernen der äußeren Formbacken mit einer derart hohen Drehgeschwindigkeit um seine Längsachse gedreht, dass der Innendurchmesser der elastomeren Formteile sich aufgrund Fliehkraft soweit vergrößert, dass sich diese aus den Formnestern lösen. Sie werden noch während ihrer Drehung und Dehnung in Axialrichtung von dem Formkern abgenommen.

Anders als im Stand der Technik, bei dem der Formkern statisch ausgebildet ist, wird der Formkern der Erfindung nach der Ausbildung der Formteile durch einen Motorantrieb auf eine so hohe Drehzahl gebracht, dass die dadurch erzeugten Fliehkräfte, die auf die Formteile wirken, dazu führen, dass die Formteile sich nach und nach aus den Formnestern lösen und dann leicht, insbesondere mittels einer geeigneten Abziehvorrichtung, von dem Formkern abnehmbar sind.

Sofern der Formkern zum Entformen im Wesentlichen horizontal ausgerichtet ist, ist eine Abzieh- oder Abstoßeinrichtung erforderlich, die die hergestellten rotierenden Ringe von dem Formkern entfernt. Wenn der Formkern jedoch horizontal im Winkel oder vertikal ausgerichtet ist, können die rotierenden Ringe nach ihrer Entformung aus den Formnestern auch durch ihr Eigengewicht ohne zusätzliche Hilfe von dem Formkern abfallen und auf eine Aufnahmevorrichtung übergeben werden.

Bei der Drehung des Formkerns mit hoher Drehzahl lösen sich die Formteile zunächst einseitig aus den Formnestern. Dadurch erhalten sie bei ihrem Herumschleudern um den Formkern eine im Wesentlichen ovale Form. Um sie während der Drehung in eine im Wesentlichen kreisförmige Form zu bringen, werden sie vorzugsweise durch einen parallel zur Achse des Formkerns angeordneten Führungsstab zum Formkern hin zurückgedrückt, so dass sich die ovale Form verkleinert und die Ringe während ihrer Drehung in eine im Wesentlichen kreisförmige Struktur gebracht werden, die konzentrisch zum Formkern ausgerichtet ist.

Zur Vermeidung des Abbremsens der mit hoher Drehzahl rotierenden Formteile durch den Führungsstab kann vorgesehen sein, dass dieser selbst in eine gegenläufige Drehung zum Formkern gebracht wird, so dass er zwar die Ausbildung der Kreisform der Ringe bewirkt, jedoch keine Bremsung der Ringe verursacht, so dass deren Durchmesser bei Erhaltung der hohen Drehzahl im Wesentlichen unverändert bleibt.

Um ein Verschieben der Ringe in Abzugsrichtung bewirken zu können, ist der Führungsstab vorzugsweise mit schräg verlaufenden Führungsrillen versehen. Er kann auch eine bürstenförmige Struktur aufweisen, die spiralförmig um den Führungsstab angeordnet ist, so dass bei dessen Drehung ein seitlicher Druckimpuls auf die drehenden Formringe gegeben werden kann, welcher diese in Richtung des Abzugsendes des Formkerns bewegt.

Die Drehgeschwindigkeit des Formkerns hängt von einer Reihe von Parametern ab, insbesondere dem Durchmesser, dem Querschnitt und der Elastizität der Formteile, der Temperatur und/oder der Querschnittsform der Formnester. Da die Querschnittsform der Formnester dem Querschnitt der Formteile entspricht, kann es in manchen Fällen erforderlich sein, die Geschwindigkeit gegenüber der bei im Querschnitt runden Ringen erforderlichen Geschwindigkeit zu erhöhen, um auch nichtrunde Ringe oder Ringe mit Lippendichtungen aus den Formnestern lösen zu können.

Die Drehgeschwindigkeit wird so groß gewählt, dass sämtliche auf einem Formkern hergestellten Ringe ohne zusätzliche mechanische Dehnung vom Formkern abgezogen werden können. Als Alternative zu einem berührenden Abzug mittels Bürsten oder Führungsschienen besteht auch die Möglichkeit, die Formkerne mittels Druckluftstößen in Richtung des Abzugsendes des Formkerns zu bewegen.

In einer alternativen Ausführungsform kann auch vorgesehen sein, nach der Herstellung der Formteile eine Hülse auf den Formkern mit den Formteilen aufzuschieben, deren Innendurchmesser einen Abstand zum Außendurchmesser des Formkerns hat, der größer als der Querschnittsdurchmesser der Formteile ist. Die Hülse wird vorzugsweise mit der gleichen Geschwindigkeit angetrieben, wie der Formkern, was dazu führt, dass, wenn sich die Formteile aus den Formnestern lösen, diese sich mit ihrem Außenumfang an die Innenseite der drehenden Hülse anlegen. Solange eine hohe Drehgeschwindigkeit der Hülse aufrechterhalten bleibt, bleiben auch die Ringe an ihrer Innenseite haften. Dabei kann der Formkern aus der Hülse herausgefahren werden, so dass danach die Drehgeschwindigkeit der Hülse abgesenkt werden kann, und dann die Ringe aus der Hülse herausfallen oder daraus entnommen werden können.

Eine zur Ausführung eines derartigen Verfahrens geeignete Einrichtung weist einen Formkern auf, der mittels eines motorischen Antriebs auf eine hohe Drehzahl gebracht werden kann. Der Formkern kann dazu an einen Drehantrieb angekoppelt werden oder auch fest mit einem Antriebsmotor verbunden sein. Da ein Formkern durchaus eine Länge von bis zu 1 m aufweisen kann, wird bevorzugt, das freie Ende des Formkerns bei der Drehung auf einen Dorn zu setzen, der Exzentrizitäten des Formkerns bei der Drehung auffängt. Der Dorn kann gleichzeitig den Aufnahmedorn der von dem Formkern abgezogenen Ringe bilden.

Um bei der hohen Drehgeschwindigkeit die Formteile auf dem Formkern in eine zentrische Lage zum Formkern zu bringen, kann ein parallel zum Formkern angeordneter Führungsstab vorgesehen sein, der entweder in einem festen Abstand zum Formkern steht oder dessen Abstand zum Formkern variabel ausgebildet ist, wobei der Führungsstab bei horizontaler Anordnung des Formkern sich unterhalb des Formkerns befindet, um die Drehachse der Formteile zur Drehachse des Formkerns hin zu verschieben.

Das erfindungsgemäße Verfahren schafft die Möglichkeit eines besonders schonenden Abzugs der Formteile von einem Formkern. Es vermeidet Beschädigungen und verhindert auch das Verdrehen der Formteile, wie es bei Abziehvorrichtungen des Standes der Technik auftritt. Es tritt kein Verschleiß des Formkerns auf. Die Formteile können sich nicht in sich verdrehen und mehrere Formteile werden sich nicht ineinander verhaspeln. Alle Formteile lassen sich auf diese Weise auch in gleicher Richtung ablegen, so dass keine nachträgliche Sortierung oder Ausrichtung der Formteile erforderlich ist.

Die Erfindung ist auf alle ringförmig geschlossenen elastomeren Formteile, insbesondere aus kautschukartigen oder silikonkautschukartigen Materialien, anwendbar, einschließlich kreisförmiger, ovaler, rechteckiger Formen, welche auch eine unterschiedliche Querschnittserstreckung in Axial- und Radialrichtung aufweisen können. Daher ist es auch möglich, Dichtungsmanschetten direkt in Ringform zu produzieren, ohne diese als Strangprofile ringförmig verkleben zu müssen.

Die Erfindung wird nachstehend anhand eines Ausführungsbeispiels näher erläutert. Es zeigen:
- Fig.1: einen vertikal ausgerichteten Formkern mit einer parallel dazu angeordneten Führungsschiene, die in Radialrichtung zum Formkern bewegbar ist,
- Fig. 2: einen horizontal ausgerichteten Formkern mit einem parallel dazu angeordneten und angetriebenen Abzugsband, das in Radialrichtung von unten her an den Formkern herangeführt werden kann,
- Fig. 3: eine Aufsicht auf einen drehbaren Führungsstab, der eine spiralförmige Oberflächenstruktur aufweist, bei dessen Drehung ein Schub in Richtung des Abzugsendes des Formteils hervorgerufen wird,
- Fig. 4: eine Schnittansicht von Fig. 3,
- Fig. 5: einen Führungsstab, der an eine Druckluftquelle angeschlossen ist und die Formteile mittels Druckluft in Abzugsrichtung befördert,
- Fig. 6: eine Querschnittsdarstellung eines Formkerns mit einem Formteil, welches auf eine hohe Drehgeschwindigkeit gebracht ist,
- Fig. 7: die Art der Verformung des Formkerns bei seitlich an den Formkern herangeführtem Führungsstab,
- Fig. 8: eine zweite Ausbildungsform mit einer um den Formkern angeordneten Hülse,
- Fig. 9: eine Schnittansicht entlang der Linie A-A von Fig. 8 mit einer Darstellung der bei hoher Drehgeschwindigkeit an der Innenseite der Hülse anliegenden Formteile.

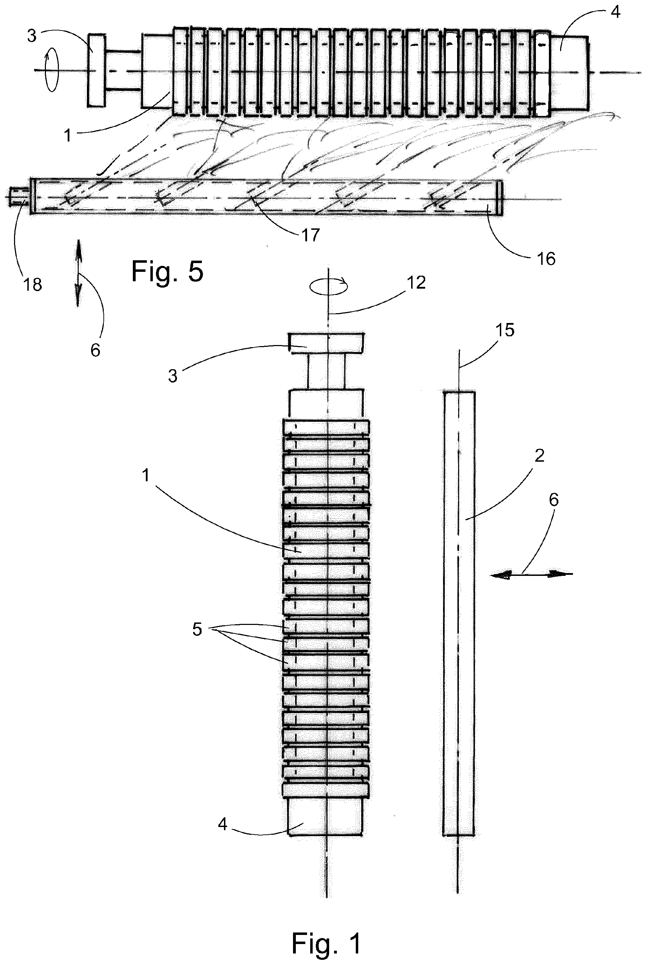

Der in Fig. 1 dargestellte vertikal gerichtete Formkern 1 enthält eine Reihe von Formnestern 5, in denen nicht dargestellte Formteile, insbesondere im Querschnitt runde Dichtungsringe, beispielsweise mit dem Durchmesser 100 mm, ausgespritzt sind. Der Formkern 1 wird über eine geeignete Kupplungseinrichtung 3 mit einem Drehantrieb verbunden, oder er kann bereits in der Spritzgussmaschine mit einem Drehantrieb verbunden sein, wobei in diesem Fall in der Regel eine horizontale Anordnung in Betracht kommt. Mittels des Drehantriebs wird der Formkern 1 auf eine hohe Umdrehungsgeschwindigkeit gebracht, die bei einem Formteildurchmesser von 100 mm etwa 2.000 - 3.000 Umdrehungen pro Minute beträgt. Bei kleineren Durchmessern ist die Drehzahl entsprechend höher zu wählen. Die Wahl der Drehzahl hängt auch ab von der Querschnittsform der Formteile und dem Elastizitätsmodul der Formteile. Je weicher und flexibler die Formteile sind, umso niedriger kann die Geschwindigkeit gewählt werden. Die Geschwindigkeit muss jedoch so groß gewählt werden, dass die Formteile sich durch Fliehkraft aus den Formnestern 5 lösen können.

Da die Formteile sich bei erhöhter Geschwindigkeit zunächst an einer Seite des Formkerns aus den Formnestern 5 lösen, nehmen sie eine ovale Form an, die es in der Regel verhindert, dass die Formteile ohne Weiteres von dem Formkern abgezogen werden können. Daher wird in Radialrichtung 6 ein Führungsstab 2 an den Formkern 1 herangeführt, der die herumschleudernden Formteile an ihren Radialmaxima zur Formkernachse 12 zurückdrängt. Dadurch werden die Formteile wieder in eine im Wesentlichen konzentrische Ringform versetzt, so dass sie nahezu keine Berührung mehr mit dem Formkern haben und daher durch Eigengewicht vom Formkern 1 abfallen können oder davon abgezogen werden können.

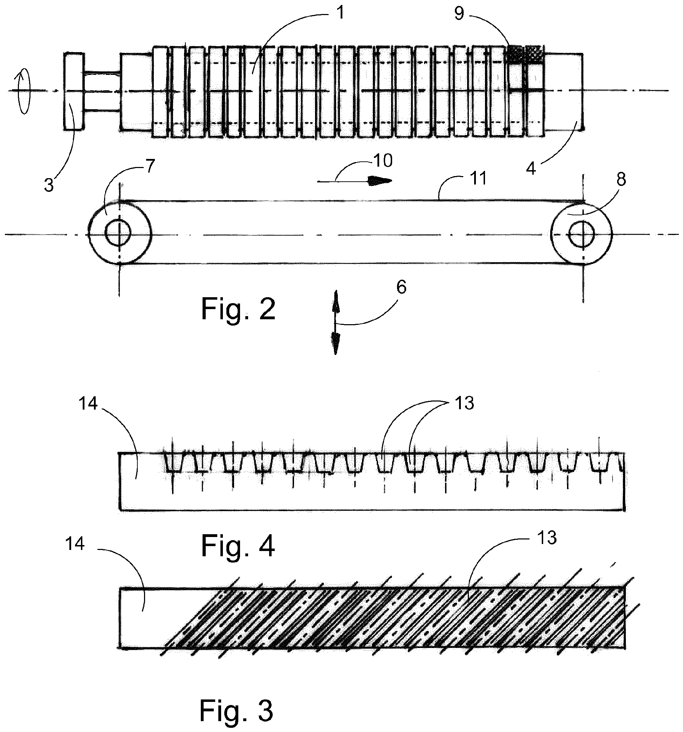

Fig. 2 zeigt eine horizontale Anordnung eines Formkerns 1, der über eine Kupplungseinrichtung 3 auf eine hohe Drehzahl gebracht wird. In dieser Ausführungsform werden die herumdrehenden Formteile mittels einer Abzugseinrichtung, bestehend aus im Wesentlichen zwei Umlenkrollen 7 und 8 sowie einem Abzugsband 11, in Abzugsrichtung 10 von dem Formkern 1 abgezogen. Dazu wird die Abzugseinrichtung in Radialrichtung 6 von unten her langsam an den Formkern 1 herangeführt, bis das Abzugsband die Formteile leicht berührt. Durch den Berührungsimpuls werden die Formteile 9 in ihrer Lage so beeinflusst, dass sie nicht nur in der Hauptdehnungsrichtung, sondern auch im übrigen Bereich aus den Formnestern des Formkerns herausgedrückt werden. Durch die Abzugsvorrichtung werden die Formteile dann nacheinander zum Abzugsende 4 des Formkerns 1 geführt und können dann auf einen Auffangdorn gegeben werden. Dieser Auffangdorn kann gleichzeitig der Zentrierung und Stabilisierung des mit hoher Drehzahl drehenden Formkerns dienen.

Fig. 3 zeigt eine Ausbildung einer Führungsschiene 14 mit spiralförmig verlaufenden Vertiefungen 13, die bei Drehung eine Schubbewegung auf die die Führungsschiene berührenden Formteile ausübt. Anstelle einer Führungsschiene 14 mit umlaufenden Vertiefungen 13 kann auch eine Führungsschiene verwendet werden, die eine umlaufende Bürstenanordnung aufweist, welche ebenfalls spiralig ausgebildet sein kann, so dass die Formteile mittels der Bürsten von dem Formkern abgezogen werden können.

Fig. 4 zeigt die Führungsschiene 14 im Querschnitt mit Vertiefungen 13.

Um zu vermeiden, dass die Formteile bei ihrem Anstoßen an die Führungsschiene ihre Drehgeschwindigkeit verlieren, kann vorgesehen sein, dass die Führungsschiene selbst in eine Drehbewegung um ihre Achse (15 in Fig. 1) versetzt wird, die entgegengesetzt zur Drehrichtung des Formkerns verläuft, so dass auch bei Anstoßen der Formteile an die Führungsschiene die Drehgeschwindigkeit der Formteile nicht verringert wird.

Fig. 5 zeigt die Anordnung eines Formkerns 1 mit seitlich an den Formkern 1 heranführbarem Düsenstock 16, welcher mehrere Auslassdüsen 17 enthält, die einen Druckluftstrahl in Richtung auf den Formkern 1 aufbringen und der an eine Druckluftquelle 18 angeschlossen ist. Damit werden die Formteile von dem Formkern heruntergeblasen, wenn die Düsenrichtungen in Richtung des Abzugsendes 4 des Formkerns in einem schrägen Winkel angestellt sind.

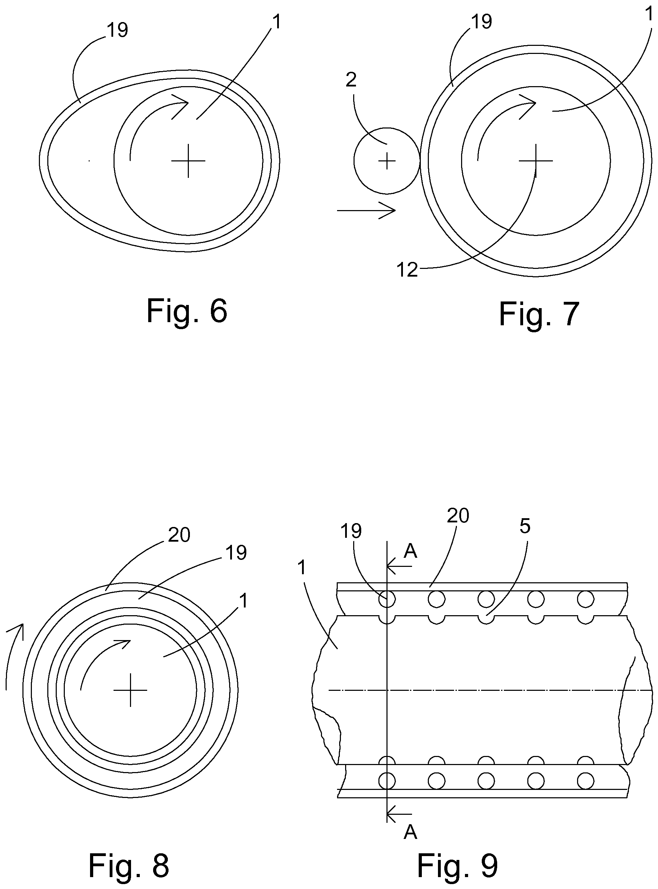

Fig. 6 zeigt eine Detailansicht eines mit hoher Geschwindigkeit angetriebenen Formkerns 1, auf dem ein Formteil 19 herumschleudert. Es ist deutlich zu erkennen, dass das Formteil 19 eine ovalförmige Gestalt annimmt.

Fig. 7 zeigt die gleiche Ausbildung mit herangeführtem Führungsstab 2, der ein Zurückdrängen des Formteils in Richtung auf die Drehachse 12 des Formkerns 1 bewirkt. Bei ausreichend hoher Drehgeschwindigkeit des Formteils 19 ist sein Innendurchmesser aufgrund der Fliehkraft größer als der Außendurchmesser des Formkerns 1. Dadurch lässt sich das Formteil bei aufrechterhaltener hoher Geschwindigkeit leicht von dem Formkern abführen oder bei entsprechender senkrechter oder schräger Anordnung des Formkerns kann das Formteil 16 auch selbsttätig von dem Formkern 1 abfallen.

In Fig. 8 zeigt eine alternative Ausführungsform der erfindungsgemäßen Einrichtung, bei der anstelle eines Führungsstabs 2 eine Hülse 20 verwendet wird, deren Innendurchmesser einen Abstand von dem Außendurchmesser des Formkerns 1 aufweist, der größer ist als der Querschnittsdurchmesser eines Formteils 19. Wenn sowohl Formteil 1 als auch Hülse 20 auf eine hohe Geschwindigkeit gedreht werden, werden die Formteile 19 aus den Formnestern 5 des Formkerns 1 heraustreten und sich an die Innenseite der Hülse 20 anlegen. Wenn die Geschwindigkeit der Hülse aufrechterhalten bleibt, bleiben auch die Formteile 19 an der Innenseite der Hülse 20 anliegend. Dann kann der Formkern 1 aus der Hülse herausgeschoben oder -gezogen werden. Eine entsprechende Darstellung zeigt Fig. 9 in Längsansicht.

### Bezugszeichen

- 1: Form kern
- 2: Führungsstab
- 3: Kupplungseinrichtung
- 4: Abzugsende
- 5: Formnester
- 6: Radialrichtung
- 7: Umlenkrolle
- 8: Umlenkrolle
- 9: Formteil
- 10: Axialrichtung
- 11: Abzugsband
- 12: Drehachse
- 13: Vertiefung
- 14: Führungsschiene
- 15: Drehachse
- 16: Düsenstock
- 17: Düse
- 18: Druckluftzufuhr
- 19: Formteil
- 20: Hülse

## Patentansprüche

1. Verfahren zum Entformen ringförmiger elastomerer Formteile von einem Formkern (1) einer den inneren Formkern (1) und äußere Formbacken aufweisenden Spritzgussform, in der die Formteile (9,19) parallel zueinander in ringförmigen Formnestern (5) des Formkerns (1) hergestellt sind, **dadurch gekennzeichnet, dass** nach Entfernen der äußeren Formbacken der Formkern (1), der auf seiner Oberfläche die hergestellten elastomeren Formteile (9,19) enthält, in eine derart hohe Drehgeschwindigkeit um seine Längsachse (12) versetzt wird, dass der Innendurchmesser der elastomeren Formteile (9, 19) sich aufgrund Fliehkraft soweit vergrößert, dass die Formteile (9, 19) sich aus den Formnestern (5) lösen und noch während ihrer Drehung in Axialrichtung (10) von dem Formkern (1) abnehmbar sind.

2. Verfahren nach Anspruch 1, **dadurch gekennzeichnet, dass** die Formteile (9, 19) während ihrer Drehung auf dem Formkern (1) und nach ihrer Entformung aus den Formnestern (5) mittels einer Abziehvorrichtung von dem Formkern (1) entfernt werden.

3. Verfahren nach Anspruch 1, **dadurch gekennzeichnet, dass** die Drehachse (12) des Formkerns (1) während seiner Drehung im Winkel zur Horizontalen ausgerichtet ist und dass die Formteile (9, 19) während ihrer Drehung auf dem Formkern (1) und nach ihrer Entformung aus den Formnestern (5) durch Eigengewicht von dem Formkern (1) abfallen.

4. Verfahren nach Anspruch 1, 2 oder 3, **dadurch gekennzeichnet, dass** die Formteile (9, 19) während ihrer Drehung und nach ihrer Entformung aus den Formnestern (5) durch wenigstens einen parallel zur Achse des Formkerns (1) angeordneten Führungsstab (2) in eine im Wesentlichen zentrische Lage zur Drehachse des Formkerns (1) gebracht werden.

5. Verfahren nach Anspruch 4, **dadurch gekennzeichnet, dass** der wenigstens eine Führungsstab (2) in Drehung entgegengesetzt zur Drehrichtung des Formkerns (1) versetzt wird und seine Umfangsgeschwindigkeit im Wesentlichen der Umfangsgeschwindigkeit des Formkerns (1) entspricht.

6. Verfahren nach Anspruch 1, **dadurch gekennzeichnet, dass** nach dem Entfernen der Formbacken eine axial zum Formkern (1) gelagerte drehbare Hülse (20) über den Formkern (1) geführt wird, deren Innendurchmesser einen Abstand zum Außendurchmesser des Formkerns (1) hat, der größer als der Querschnittsdurchmesser der Formteile (9, 19) ist, und dass die Hülse (20) mit im Wesentlichen der gleichen oder höheren Geschwindigkeit wie der Formkern (1) angetrieben wird, wobei der Formkern (1) nach Ablösung der Formteile (9, 19) aus den Formnestern (5) aus der Hülse (20) entfernt wird, bevor die Drehgeschwindigkeit der Hülse (20) abgesenkt wird.

7. Verfahren nach einem oder mehreren der vorhergehenden Ansprüche, **dadurch gekennzeichnet, dass** die Drehgeschwindigkeit des Formkerns (1) in Abhängigkeit von seinem Durchmesser, dem Querschnitt der Formteile, der Elastizität der Formteile, der Temperatur und/oder der Querschnittsform der Formnester (5) gewählt ist.

8. Verfahren nach einem der vorhergehenden Ansprüche, **dadurch gekennzeichnet, dass** die Formteile (9, 19) nach dem Entfernen von dem Formkern (1) auf einen Aufnahmedorn übergeben werden.

9. Einrichtung zum Entformen ringförmiger elastomerer Formteile von einem Formkern (1) einer den inneren Formkern (1) und äußere Formbacken aufweisenden Spritzgussform zur Ausführung eines Verfahrens nach Anspruch 1, wobei der Formkern (1) eine Reihe parallel zueinander auf dem Außenumfang des Formkerns (1) ausgebildeter ringförmiger Formnester (5) aufweist, in denen in Zusammenwirken mit den äußeren Formbacken die elastomeren Formteile gebildet werden können, **dadurch gekennzeichnet, dass** der Formkern (1) um seine Längsachse (12) drehbar ausgebildet ist und nach Entfernen der äußeren Formbacken mit einer derartigen Umfangsgeschwindigkeit antreibbar ist, dass der Innendurchmesser der in den Formnestern (5) gebildeten Formteile (9, 19) sich durch Fliehkraft soweit vergrößert, das die Formteile (9, 19) sich aus den Formnestern (5) lösen und in Axialrichtung (10) von dem Formkern (1) entfernbar sind.

10. Einrichtung nach Anspruch 9, **dadurch gekennzeichnet, dass** ein Führungsstab (2) vorgesehen ist, der durch seitliches Heranführen an den Formkern (1) die darauf herumschleudernden Formteile (9, 19) in eine im Wesentlichen zentrische Lage zur Drehachse des Formkerns (1) bringt.

11. Einrichtung nach Anspruch 10, **dadurch gekennzeichnet, dass** der Führungsstab (2) als Abziehvorrichtung ausgebildet ist, mit deren Hilfe die aus den Formnestern (5) gelösten Formteile (9, 19) in Längsrichtung des Formkerns (1) abziehbar sind.

12. Einrichtung nach Anspruch 11, **dadurch gekennzeichnet, dass** die Abziehvorrichtung eine spiralförmige Oberflächenstruktur aufweist und drehbar ausgebildet ist.

13. Einrichtung nach Anspruch 11 oder 12, **dadurch gekennzeichnet, dass** die Abziehvorrichtung eine bürstenförmige Oberflächenstruktur aufweist.

14. Einrichtung nach Anspruch 11, **dadurch gekennzeichnet, dass** die Abziehvorrichtung ein in Axialrichtung (10) des Formkerns (1) wirkendes umlaufendes Abziehband (11) enthält.

15. Einrichtung nach Anspruch 11, **dadurch gekennzeichnet, dass** die Abziehvorrichtung mit einer Druckluftquelle (18) verbunden ist, und dass die Abziehvorrichtung Auslassdüsen enthält, die derart schräg gegen die umlaufenden Formteile (9, 19) gerichtet sind, dass die Formteile (9, 19) während ihrer Drehung mittels Druckluft zum Ablaufende des Formkerns (1) geführt werden.

16. Einrichtung nach einem der Ansprüche 9 - 14, bei der der Formkern (1) im Wesentlichen horizontal ausgerichtet ist.

17. Einrichtung nach Anspruch 9 oder 10, **dadurch gekennzeichnet, dass** der Formkern (1) während der Drehung im Winkel zur Horizontalen ausgerichtet ist.

18. Einrichtung nach Anspruch 9, **dadurch gekennzeichnet, dass** eine Hülse (20) vorgesehen ist, die nach Entfernung der äußeren Formbacken koaxial über den Formkern (1) geführt werden kann und zusammen mit dem Formkern (1) antreibbar ist, wobei der Innendurchmesser der Hülse (20) einen Abstand von dem Außendurchmesser des Formkerns (1) aufweist, der größer als der Querschnittsdurchmesser der Formteile (9, 19) ist, und dass der Formkern (1) während der Drehung der Hülse (20) aus dieser entfernbar ist.

## Claims

1. A method for demolding annular elastomeric molded parts from a mold core (1) of an injection mold which has the inner mold core (1) and outer mold jaws and in which the molded parts (9, 19) are produced parallel to one another in annular mold cavities (5) of the mold core (1), **characterized in that**, after removal of the outer mold jaws, the mold core (1), which contains the produced elastomeric molded parts (9, 19) on the surface thereof, is set at such a high rotational speed about the longitudinal axis (12) thereof that the internal diameter of the elastomeric molded parts (9, 19) is increased because of centrifugal force to such an extent that the molded parts (9, 19) are released from the mold cavities (5) and can be removed from the mold core (1) in the axial direction (10) while still rotating.

2. The method according to claim 1, **characterized in that** during the rotation of the molded parts (9, 19) on the mold core (1) and after demolding thereof from the mold cavities (5) said molded parts are removed from the mold core (1) by means of an extracting device.

3. The method according to claim 1, **characterized in that** the axis of rotation (12) of the mold core (1) during rotation of the latter is oriented at an angle to the horizontal, and that during the rotation of the molded parts (9, 19) on the mold core (1) and after demolding thereof from the mold cavities (5) said molded parts fall from the mold core (1) under their own weight.

4. The method according to claim 1, 2 or 3, **characterized in that** during the rotation of the molded parts (9, 19) and after demolding thereof from the mold cavities (5) said molded parts are brought into a substantially central position with respect to the axis of rotation of the mold core by at least one guide rod (2) arranged parallel to the axis of the mold core (1).

5. The method according to claim 4, **characterized in that** the at least one guide rod (2) is set in rotation in the opposite direction to the mold core (1) and its circumferential speed corresponds substantially to the circumferential speed of the mold core (1).

6. The method according to claim 1, **characterized in that** after the removal of the mold jaws a rotatable bushing (20) which is mounted axially relative to the mold core (2) is guided over the mold core (1), the internal diameter of said bushing having a spacing from the external diameter of the mold core (1) greater than the cross-sectional diameter of the molded parts (9, 19), and that the bushing (20) is driven at substantially the same speed as the mold core (1) or at a higher speed, wherein after release of the molded parts (9, 19) from the mold cavities (5) the mold core (1) is removed from the bushing (20) before the speed of rotation of the bushing (20) is reduced.

7. The method according to one or more of the preceding claims, **characterized in that** the speed of rotation of the mold core (1) is chosen as a function of its diameter, the cross-section of the molded parts, the elasticity of the molded parts, the temperature and/or the cross-sectional shape of the mold cavities (5).

8. The method according to one or more of the preceding claims, **characterized in that** the molded parts (9, 19) are transferred to a receiving mandrel after the removal of the mold core (1).

9. A device for demolding annular elastomeric molded parts from a mold core of an injection mold comprising the inner mold core (1) and outer mold jaws for carrying out the method according to claim 1, wherein the mold core (1) has a series of annular mold cavities (5) which are formed parallel to one another on the external circumference of the mold core (1) and in which in collaboration with the external mold jaws the elastomeric molded parts can be formed, **characterized in that** the mold core (1) is designed to be rotatable about its longitudinal axis (12) and, after removal of the outer mold jaws, can be driven at such a circumferential speed that the internal diameter of molded parts (9, 19) formed in the mold cavities (5) is increased because of centrifugal force to such an extent that the molded parts are released from the mold cavities (5) and can be removed from the mold core (1) in the axial direction.

10. The device according to claim 9, **characterized in that** a guide rod (2) is provided which, by lateral advance towards the mold core (1), brings the mold parts (9, 19) revolving thereon into a substantially central position relative to the axis of rotation of the mold core (1).

11. The device according to claim 10, **characterized in that** the guide rod (2) is designed as an extracting device, with the aid of which the molded parts (9, 19) released from the mold cavities (5) can be withdrawn in the longitudinal direction of the mold core (1).

12. The device according to claim 11, **characterized in that** the extracting device has a spiral surface structure and is designed to be rotatable.

13. The device according to claim 11 or 12, **characterized in that** the extracting device has a brush-like surface structure.

14. The device according to claim 11, **characterized in that** the extracting device contains a circulating extracting belt (11) which acts in the axial direction (10) of the mold core (1).

15. The device according to claim 11, **characterized in that** the extracting device is connected to a compressed air source (18), and that the extracting device contains outlet nozzles which are directed obliquely against the revolving molded parts (19) in such a way that, while the molded parts (9, 19) are rotating they are guided by means of compressed air to the outlet end of the mold core (1).

16. The device according to one of the claims 9 - 14, wherein the mold core (1) is oriented substantially horizontally.

17. The device according to claims 9 or 10, **characterized in that** during the rotation the mold core (1) is oriented at an angle to the horizontal.

18. The device according to claim 9, **characterized in that** a bushing (20) is provided which, after removal of the outer mold jaws, can be guided coaxially over the mold core (1) and can be driven together with the mold core (1), wherein the internal diameter of the bushing (20) has a spacing from the external diameter of the mold core (1) which is greater than the cross-sectional diameter of the molded parts (9, 19), and that the mold core (1) can be removed from the bushing (20) during the rotation of the latter.

## Revendications

1. Procédé pour démouler des pièces moulées annulaires en élastomère d'un noyau (1) d'un moule à injection qui comporte ledit noyau intérieur (1) et des blocs de moule extérieurs et dans lequel les pièces moulées (9, 19) sont fabriquées parallèlement les unes aux autres dans des empreintes annulaires (5) du noyau (1), **caractérisé en ce qu'**après l'enlèvement des blocs de moule extérieurs, le noyau de moule (1), qui comporte sur sa surface les pièces moulées en élastomère (9, 19) fabriquées, est amené à une vitesse de rotation, sur son axe longitudinal (12), qui est telle que le diamètre intérieur des pièces en élastomère (9, 19) augmente en raison de la force centrifuge au point que lesdites pièces (9, 10) se détachent des empreintes de moule (5) et sont aptes à être enlevées du noyau (1) dans le sens axial (10) alors qu'elles tournent encore.

2. Procédé selon la revendication 1, **caractérisé en ce que** les pièces moulées (9, 19), pendant qu'elles tournent sur le noyau de moule (1) et après qu'elles ont été démoulées des empreintes (5), sont enlevées dudit noyau (1) à l'aide d'un extracteur.

3. Procédé selon la revendication 1, **caractérisé en ce que** l'axe de rotation (12) du noyau de moule (1), pendant qu'il tourne, est orienté suivant un certain angle par rapport à l'horizontale, et **en ce que** les pièces moulées (9, 19), pendant qu'elles tournent sur le noyau de moule (1) et après qu'elles ont été démoulées des empreintes (5), tombent dudit noyau (1) par gravité.

4. Procédé selon la revendication 1, 2 ou 3, **caractérisé en ce que** les pièces moulées (9, 19), pendant qu'elles tournent et après qu'elles ont été démoulées des empreintes (5), sont amenées par au moins une tige de guidage (2) disposée parallèlement à l'axe du noyau de moule (1) dans une position globalement centrée par rapport à l'axe du noyau (1).

5. Procédé selon la revendication 4, **caractérisé en ce que** la ou les tiges de guidage (2) sont mises en rotation dans le sens inverse du sens de rotation du noyau de moule (1), et leur vitesse périphérique correspond globalement à la vitesse périphérique dudit noyau (1).

6. Procédé selon la revendication 1, **caractérisé en ce qu'**après l'enlèvement des blocs de moule est amené sur le noyau de moule (1) un manchon rotatif (20) qui est monté axialement par rapport au noyau (1) et dont le diamètre intérieur présente par rapport au diamètre extérieur du noyau de moule (1) un écartement qui est supérieur au diamètre de section transversale des pièces moulées (9, 19), et **en ce que** le manchon (20) est entraîné à une vitesse globalement égale ou supérieure à celle du noyau (1), ledit noyau (1), après que les pièces moulées (9, 19) se sont détachées des empreintes (5), étant enlevé avant que la vitesse de rotation du manchon (20) ne soit réduite.

7. Procédé selon l'une au moins des revendications précédentes, **caractérisé en ce que** la vitesse de rotation du noyau de moule (1) est choisie en fonction de son diamètre, de la section transversale des pièces moulées, de l'élasticité desdites pièces moulées, de la température et/ou de la forme de section transversale des empreintes (5).

8. Procédé selon l'une au moins des revendications précédentes, **caractérisé en ce que** les pièces moulées (9, 19), après avoir été enlevées du noyau de moule (1), sont transférées sur une broche de réception.

9. Dispositif pour démouler des pièces moulées annulaires en élastomère d'un noyau (1) d'un moule à injection qui comporte ledit noyau intérieur (1) et des blocs de moule extérieurs, pour la mise en oeuvre d'un procédé selon la revendication 1, le noyau de moule (1) comportant une rangée d'empreintes de moule annulaires (5) qui sont formées parallèlement les unes aux autres sur la circonférence extérieure du noyau (1) et dans lesquelles les pièces moulées en élastomère peuvent être formées en coopération avec les blocs de moule extérieurs, **caractérisé en ce que** le noyau (1) est conçu pour pouvoir tourner sur son axe longitudinal (12) et, après l'enlèvement des blocs de moule extérieurs, est apte à être entraîné à une vitesse périphérique qui est telle que le diamètre intérieur des pièces en élastomère (9, 19) formées dans les empreintes (5) augmente du fait de la force centrifuge au point que lesdites pièces (9, 19) se détachent desdites empreintes (5) et sont aptes à être enlevées du noyau (1) dans le sens axial (10).

10. Dispositif selon la revendication 9, **caractérisé en ce qu'**il est prévu une tige de guidage (2) qui, en approchant latéralement du noyau de moule (1), amène les pièces moulées (9, 19) qui tournent sur celui-ci par centrifugation dans une position globalement centrée par rapport au noyau (1).

11. Dispositif selon la revendication 10, **caractérisé en ce que** la tige de guidage (2) est conçue comme un extracteur à l'aide duquel les pièces moulées (9, 19) détachées des empreintes (5) sont aptes à être extraites dans le sens longitudinal du noyau de moule (1).

12. Dispositif selon la revendication 11, **caractérisé en ce que** l'extracteur présente une structure de surface en spirale et est conçu pour pouvoir tourner.

13. Dispositif selon la revendication 11 ou 12, **caractérisé en ce que** l'extracteur présente une structure de surface en forme de brosse.

14. Dispositif selon la revendication 11, **caractérisé en ce que** l'extracteur contient une bande d'extraction périphérique (11) qui agit dans le sens axial (10) du noyau de moule (1).

15. Dispositif selon la revendication 11, **caractérisé en ce que** l'extracteur est relié à une source d'air comprimé (18), et **en ce que** l'extracteur contient des éjecteurs qui sont orientés en biais vers les pièces moulées périphériques (9, 19) de telle sorte que celles-ci, pendant leur rotation, soient guidées vers l'extrémité de sortie du noyau de moule (1) à l'aide d'air comprimé.

16. Dispositif selon l'une des revendications 9 à 14, dans lequel le noyau de moule (1) est orienté globalement à l'horizontale.

17. Dispositif selon la revendication 9 ou 10, **caractérisé en ce que** le noyau de moule (1), pendant qu'il tourne, est orienté suivant un certain angle par rapport à l'horizontale.

18. Dispositif selon la revendication 9, **caractérisé en ce qu'**il est prévu un manchon (20) qui, après l'enlèvement des blocs de moule extérieurs, peut être amené coaxialement sur le noyau de moule (1) et qui est apte à être entraîné conjointement avec celui-ci, le diamètre intérieur du manchon (20) présentant par rapport au diamètre extérieur du noyau (1) un écartement qui est supérieur au diamètre de section transversale des pièces moulées (9, 10), et **en ce que** le noyau (1) est apte à être enlevé du manchon (20) pendant qu'il tourne sur celui-ci.
